(19) Europäisches Patentamt
European Patent Office
Office européen des brevets

(11) Veröffentlichungsnummer: **0 090 168**
B1

(12) # EUROPÄISCHE PATENTSCHRIFT

(45) Veröffentlichungstag der Patentschrift: **21.05.86**

(51) Int. Cl.[4]: **C 10 M 143/00**, C 08 J 3/08, C 08 F 2/08

(21) Anmeldenummer: **83101528.4**

(22) Anmeldetag: **18.02.83**

(54) **Konzentrierte Emulsionen von Olefincopolymerisaten.**

(30) Priorität: **01.03.82 DE 3207292**

(43) Veröffentlichungstag der Anmeldung: **05.10.83 Patentblatt 83/40**

(45) Bekanntmachung des Hinweises auf die Patenterteilung: **21.05.86 Patentblatt 86/21**

(84) Benannte Vertragsstaaten: **BE FR GB IT NL**

(56) Entgegenhaltungen:
**EP-A-0 014 746**
**DE-A-1 570 771**
**FR-A-2 126 747**
**FR-A-2 185 656**

(73) Patentinhaber: **Röhm GmbH, Kirschenallee Postfach 4242, D-6100 Darmstadt 1 (DE)**

(72) Erfinder: **Pennewiss, Horst, Dr., Meissnerweg 53, D-6100 Darmstadt-Neu-Kranichstein (DE)**
Erfinder: **Schweder, Roland, Bartningstrasse 20, D-6100 Darmstadt-Kranichstein (DE)**
Erfinder: **Knöll, Helmut, Brandauer Klinger 16, D-6147 Lautertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

EP 0 090 168 B1

**Beschreibung**

Die Erfindung betrifft konzentrierte Emulsionen von Olefincopolymerisaten in einem Olefincopolymeriaate nicht lösenden Trägermedium zur Verwendung als Schmieröladditive insbesondere zusammen mit Acrylharzen.

Die beiden Polymerisatklassen, nämlich öllösliche Olefincopolymerisate (OCP), insbesondere Äthylen-Propylen-Copolymerisate, und öllösliche Polymere auf Basis von Polyalkyl(meth)acrylaten (PAMA) finden ausgedehnte Verwendung als Schmieröladditive, da sie das Viskositäts-Temperatur-Verhalten von Mehrbereichsmineralölen verbessern (VI-Verbesaerer). Neben der Verdickungswirkung wird von VI-Verbesserern genügende Scherstabilität erwartet. Weiter gehören eine gute Dispergier- bzw. Detergenzwirkung gegenüber Kaltschlamm und sich absetzenden Schmutz in den Motoren zu den erwünschten Eigenschaften von VI-Verbesserern. Beide Produktklassen weisen Vorzüge und Nachteile auf. Die Polyolefine besitzen eine ausgezeichnete Verdickungswirkung, jedoch keine nennenswerte stockpunktserniedrigende Wirkung, so daß Stockpunktverbesserer zugesetzt werden müssen. Polyalkylmethacrylatezusatz verleiht den Mineralölen ein gutes Viskositätstemperaturverhalten und - bei genügend hoher Konzentration eine hervorragende Verschleißschutzwirkung. Hervorzuheben ist auch ihre stockpunkterniedrigende Wirkung.

Einer Kombination der beiden Polymerisattypen für den gleichzeitigen Einsatz in Mineralölen steht ihre Unverträglichkeit im Wege: Von der Technik werden Schmieröladditive in flüssiger Form (Mineralölbasis) gefordert, die einen möglichst hohen Polymerisatgehalt aufweisen. Die beiden Polymerisattypen sind jedoch nur solange ohne Schwierigkeiten zusammen in Mineralöl löslich, als der eine Polymerisattyp mengenmäßig absolut dominiert. (Anteil des anderen Polymerisattyps höchstens ca. 5 Gew.-%, bezogen auf den Gesamtpolymerisatgehalt). Beim Überschreiten dieser Grenze kommt es zur Phasentrennung der Polymerisate, die bei hinreichend langer Lagerung zu Schichtenbildung führen kann.

**Stand der Technik**

In der DE-A 29 05 954 werden konzentrierte Polymerisatemulsionen aus zur VI-Verbesserung geeigneten Poly(meth)acrylaten (PAMA) und Olefincopolymerisaten (OCP) in Mineralöl gelehrt, wobei die Emulsion als kontinuierliche Phase Polyacrylate bzw. -methacrylate mit einem definierten, niedrigen Molgewichtsbereich, als disperse Phase ein OCP mit einem hinsichtlich der Verdickungswirkung komplementären Molgewicht, ein Trägermedium das gegenüber PAMA als gutes Lösungsmittel und - aufgrund des darin gelösten PAMA - gegenüber dem OCP als wesentlich weniger gutes Lösungsmittel wirkt und als stabilisierendes Mittel für die Phasenverteilung ein Pfropf- und/oder ein Blockpolymerisat aus Olefincopolymerisaten und Acryl- und/oder Methacrylsäureestenn enthält. Das höchste in der DE-A offenbarte Verhältnis OCP zu PAMA beträgt 60: 40 (Unteranspruch 4).

Im Trägermedium können noch Lösungsmittel mit geringer Lösungswirkung für OCP z.B. Ester- oder Alkoholbasis enthalten sein.

Ein wesentlicher Grund für die schlechte Löslichkeit liegt bei der OCP-Phase in deren Unverträglichkeit mit der PAMA-Phase, denn das im Trägermedium enthaltene Mineralöl löst beide Phasen etwa gleich gut, was zu einer annähernd gleichmäßigen Verteilung zwischen beiden Phasen führt.

**Aufgabe**

Die Lehre der DE-A 29 05 954 stellt eine auf das System OCP/ PAMA in Mineralöl zugeschnittene Problemlösung dar, wobei man an die Einhaltung einer Reihe von Parametern gebunden war. Man bringt dabei im allgemeinen zunächst das in fester Form vorliegende OCP in Mineralöl in Lösung, dann wird der - meist in situ hergestellte - Emulgator, bestehend aus dem Pfropf- und/oder Blockpolymerisat aus OCP und Methacrylsäureester zugesetzt. Die zur Stabilisierung der Phasen notwendige Menge an Emulgator soll 5 Gew.-%, bezogen auf das Gesamtpolymerisat, nicht unterschreiten. Andererseits setzt ein hoher Anteil an Pfropfpolymerisat als Stabilisator/Emulgator die Wirkssmkeit von VI-Verbesserern tendenzmäßig herab.

Es bestand nun die Aufgabe, konzentrierte Emulsionen von Olefincopolymerisaten zur Verfügung zu stellen, die eine wesentlich weitergehende Anwendbarkeit aufweisen als die des Standes der Technik. Auch hinsichtlich der Emulgatoren sollte ein höherer Grad an Flexibilität erreicht werden als bei den bekannten Systemen, wobei die benötigte Mange an Emulgator nach Möglichkeit zu reduzieren war.

Weiter waren Vorteile zu erwarten, wenn es gelang, das OCP direkt, d.h. ohne einen zwischengeschalteten Lösungsvorgang in eine konzentrierte Emulsion überzuführen. Das zu emulgierende OCP gehört dem Stand der Technik an. Der Struktur nach entspricht es in der Regel dem Segment A in Formel I (s. unten). Die Molgewichte liegen im allgemeinen bei 10 000 bis 300 000.

**Lösung**

Die vorliegende Aufgabe kann gemäß Hauptanspruch gelöst werden. Im allgemeinen enthalten die erfindungsgemäßen, konzentrierten OCP-Emulsionen 20 bis 65 Gew.-%, vorzugsweise 30 bis 50 Gew.-%, an OCP. Es ist u.a. die Bedingung entfallen, das Trägermedium müsse aufgrund der darin gelösten Polyacrylsäure- bzw. Methacrylsäureester ein schlechtes Lösungsmittel gegenüber der OCP-Phase sein, sondern die geringe Löslichkeit resultiert allein aus den chemisch-physikalischen Eigenschaften von Polymer und Lösungsmittel. Die

erfindungsgemäß wirksamen Emulgatoren entsprechen der allgemeinen Formel I

A - Y I

worin A für ein Segment aus einem Olefincopolymerisat oder hydriertem Polyisopren oder einem hydrierten Copolymeren aus Butadien/Isopren und Y für ein oder mehrere durch Polymerisation von Vinylmonomeren, die im wesentlichen, d.h. zu über 70 % nicht dem (Meth)acrylattyp angehören, gebildete Segmente steht.

Die erfindungsgemäß zu verwendenden Olefincopolymerisate entsprechend A sind bekannt. Es handelt sich in erster Linie um solche, die aus Äthylen, Propylen, Butylen oder/und weiteren α-Olefinen mit 5 - 20 C-Atomen aufgebaut sind. Das Molekulargewicht liegt im allgemeinen bei 10 000 bis 300 000, vorzugsweise zwischen 50 000 und 150 000. Derartige Olefincopolymerisate sind beispielsweise in den deutschen Offenlegungsschriften DE-OS 16 44 941, DE-OS 17 69 834, DE-OS 19 39 037, DE-OS 19 83 039 und DE-OS 20 59 981 beschrieben. Sofern A ein Segment aus einem hydrierten Polyisopren darstellt, so sind käufliche Blockcopolymere auf der Basis eines selektiv hydrierten Polyisopren/Polystyrol (z.B. das Handelsprodukt SHELLVIS 50®) bevorzugt.

Gut brauchbar sind auch Äthylen-Propylen-Copolymere; ebenfalls sind Terpolymere unter Zusatz der bekannten Terkomponenten wie Äthyliden-Norbornen möglich, es ist jedoch deren Neigung zur Vernetzung beim Alterungsprozeß mit einzukalkulieren. Die Verteilung kann dabei weitgehend statistisch sein, es können aber auch mit Vorteil Sequenzpolymere mit Äthylenblöcken angewendet werden. Das Verhältnis der Monomeren Äthylen-Propylen ist dabei innerhalb gewisser Grenzen variabel, die bei etwa 75 % für Äthylen und etwa 80 % für Propylen als obere Grenze angesetzt werden können. Infolge seiner verminderten Löslichkeitstendenz in Öl ist bereits Polypropylen weniger geeignet als Äthylen-Propylen-Copolymere.

Das Segment Y besteht vorzugsweise aus Vinyl-Homo- oder Copolymeren, aufgebaut aus Monomeren der Formel II

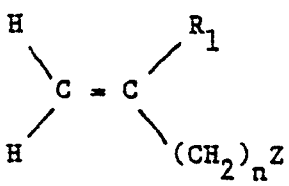

II

worin $R_1$ Wasserstoff oder Methyl und Z einen -$OR_2$-Rest, einen -$COR_3$-Rest, einen

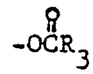

-Rest oder ein Chloratom bedeutet und worin $R_2$ und $R_2'$ für einen gegebenenfalls verzweigten Alkylrest mit 1 bis 20 Kohlenstoffatomen oder für einen Phenylrest und $R_3$ und $R_3'$ für einen gegebenenfalls verzweigten. Alkylrest mit 1 bis 20 Kohlenstoffatomen oder für einen Phenylrest und n für 0 oder 1 steht, und/oder Monomeren der Formel III

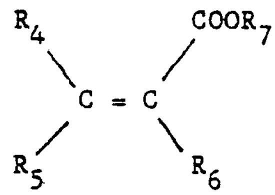

III

worin $R_4$ und $R_5$ Wasserstoff oder einen Rest -$COOR'_7$, $R_6$, Wasserstoff oder einen Rest -$CH_2COOR_7''$ bedeuten mit der Maßgabe, daß die Verbindung der Formel III zwei Estergruppen enthalten muß und worin $R_7$ $R'_7$ und $R''_7$ für einen gegebenenfalls verzweigten Alkylrest mit 1 bis 20 Kohlenstoffatomen stehen. Das Segment Y kann gegebenenfalls noch Anteile der Monomeren der Formel IV

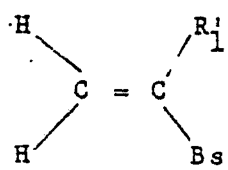

IV

worin $R_1'$ die Bedeutung von $R_1$ besitzt und Bs einen stickstoffhaltigen funktionellen Rest wie eine -C≡N Gruppe, eine Gruppe -$CONR_8R_9$, worin $R_8$ und $R_9$ für Wasserstoff oder einen Alkylrest mit 1 bis 20 Kohlenstoffatomen steht, oder worin $R_8$ und $R_9$ unter Einbeziehung des Stickstoffs einen heterocyclischen 5- oder 6-Ring bilden oder worin Bs für einen (inerten) heterocyclischen Rest, insbesondere einen Pyridin-, Pyrolidin-, Imidazol-, Carbazol-Lactam-Rest bzw. alkylierten Derivaten

derselben steht bedeutet, oder Bs die Bedeutung -$CH_2OH$ besitzt und/oder noch Anteile an Monomeren der Formel V

$$\begin{array}{l} \qquad\quad R_{10} \\ \qquad\quad\; | \\ H_2C = C - COO - X - R_{11} \end{array} \qquad V$$

worin X für einen, gegebenenfalls alkylsubstituierten Alkylenrest mit 2 bis 8 Kohlenstoffatomen und $R_{11}$ für -OH, für -$OR'_7$ oder für einen Rest -$NR_8'R_9'$ steht, wobei $R'_8$ und $R'_9$ die gleichen Bedeutungen wie $R_8$ und $R_9$ besitzen, z.B. zusammen mit dem Stickstoffatom, gegebenenfalls unter Einbeziehung eines weiteren Heteroatoms einen fünf- bis sechsgliedrigen heterocyclischen Ring bilden, und $R_{10}$ für Wasserstoff oder Methyl steht, vorhanden sein können. Als Beispiele für Monomeren der Formel II und III seien besonders genannt Styrol, α-Methylstyrol, Vinylchlorid, Vinylacetat, Vinylstearat, Vinylmethylketon, Vinylisobutyläther, Allylacetat, Allylchlorid, Allylisobutyläther, Allylmethylketon, Dibutylmaleinat, Dilaurylmaleinat, Dibutylitaconat.

Der Anteil der Monomeren der Formeln IV und V am Segment Y liegt im allgemeinen zwischen 0 und 60 Gew.-% (bezogen auf die Monomeren des Segments Y), wobei der Anteil der von der Acryl- oder Methacrylsäure abgeleiteten Monomeren unterhalb 30 Gew.-% liegen soll.

Im einzelnen wird das Segment Y nach Anteil und Zusammensetzung gemäß der gewünschten technischen Funktion gewählt werden. So wird das Segment Y wie auch das Segment A bestimmte Voraussetzungen erfüllen müssen, um optimale Eignung als Viskositätsindex-Verbesserer bei Mineralölen zu besitzen. Die Stabilität der Emulsion ist besonders gut, wenn das Molgewicht des Segments A mindestens gleich dem Molgewicht des zu emulgierenden OCP und das Molgewicht des Einzelsegments Y größer 20 000 ist.

Im vorliegenden Falle sollte die Forderung erfüllt sein, daß auch das Segment Y ausreichende Löslichkeit in Mineralölen besitzt. Der Anteil der polaren Monomeren, speziell der Monomeren der Formeln IV und V, wird in diesem Falle 20 Gew.-% nicht überschreiten, vorzugsweise liegt er bei 0 bis 10 Gew.-% (bezogen auf die Monomeren des Segments Y), besonders bevorzugt bei 0 bis 5 Gew.-%. Als Monomeren der Formel IV seien C- und N-Vinylpyridin sowie Vinylpyrrolidin, Vinylpyrrolidon, Vinylcarbazol, Vinylimidazol, insbesondere die N-Vinylverbindungen genannt, als Monomere der Formel V, insbesondere Hydroxy- und Dialkylaminoalkylester der Acryl- bzw. der Methacrylsäure, speziell Dimethylaminoäthyl(meth)acrylat, Dimethylaminopropyl(meth)acrylat, Hydroxyäthyl(meth)acrylat.

Der Anteil der Monomeren gemäß den Formeln II und III kann bis 100 Gew.-% gehen, vorzugsweise liegt er bei 100 bis 50 Gew.-%.

Die Segmente A und-Y stehen im allgemeinen im Gewichtsverhältnis 1: 20 bis 20: 1, vorzugsweise 1: 4 bis 1: 1.

Im allgemeinen enthalten die erfindungsgemäßen konzentrierten OCP-Emulsionen den Emulgator AY in Konzentrationen von 1 bis 50 Gew.-%, vorzugsweise 5 bis 15 Gew.-%. Falls die erfindungsgemäßen konzentrierten Emulsionen für andere Anwendungszwecke vorgesehen sind als VI-Verbesserer, kann das Segment Y in entsprechender Weise an die vorgesehene Verwendung angepaßt sein.

**Herstellung der Emulgatoren**

Der Emulgator wird in der Regel in einer gesonderten Stufe vorab hergestellt. Die Verfahren zur Herstellung geeigneter Emulgatoren vom Typ A - Y sind an sich bekannt. So kann z.B. nach der Methode der Übertragungspfropfung vorgegangen werden:(Vgl. auch Houben-Weyl, Methoden der Org. Chemie, Bd. 14/1, S. 114, H.A.J. Battaerd, G.W. Tregear, Polymer Reviews, Vol. 16, Interscience (1987)).

Dazu stellt man eine 10 - 20 %ige Lösung eines OCP in einem geeigneten, unter Polymerisationsbedingungen inerten Lösungsmittel her. Vorteilhafterweise verwendet man ein Lösungsmittel bzw. Lösungsmittelsystem, in dem gelöst der Emulgator beim vorliegenden Verfahren dem Trägermedium ohne weiteres zugefügt werden kann. Dies erfordert einen Siedepunkt, der oberhalb der Verfahrenstemperatur liegt. Als Lösungsmittel kommen z.B. Butylacetat, Trimethyladipinsäureoctylester, Pentaerythrittetraadipinsäure u.ä. in Frage. Zu diesen Lösungen gibt man die Vinylmonomeren der Formel II bis V in den angegebenen Verhältnissen und polymerisiert unter Zusatz eines oder mehrerer vorzugsweise peroxidischer Radikal-Initiatoren bei Temperaturen von 60 - 150°C innerhalb von gewöhnlich 4 - 8 Stunden. Anzustreben ist ein möglichst vollständiger Umsatz. Vorzugsweise finden Perester wie tert.-Butylperoctoat Verwendung. Die Initiatorkonzentration richtet sich nach der Zahl der gewünschten Pfropfstellen und dem gewünschten Molekulargewicht des Segments Y. Im allgemeinen liegt die Initiatorkonzentration zwischen 0,2 und 3 Gew.-%, bezogen auf das Polymerisat.

Gegebenenfalls können zur Einstellung des gewünschten Molekulargewichts der Segmente Y noch Regler mitverwendet werden. Als Regler eignen sich z.B. Schwefelregler, insbesondere mercaptogruppenhaltige Regler, z.B. Dodecylmercaptan. Die Konzentrationen an Reglern liegen im allgemeinen bei 0,1 bis 1,0 Gew.-%, bezogen auf das Gesamtpolymerisat.

Eine weitere Methode zur Herstellung der Emulgatoren AY stellt die Hydroperoxidation

eines OCP als ersten Schritt dar. Die auf diese Weise gebildeten, kettenständigen Hydroperoxidgruppen können in einer folgenden Stufe die Pfropfpolymerisation der Vinylmonomeren initiieren. (Vgl. H.A.J. Battaerd, G.W. Tregaer, Polymer Reviews loc.cit.)

Ein Verfahren zur Herstellung von geeigneten Blockpolymerisaten besteht z.B. in der anionischen Polymerisation. Dabei kann man beispielsweise so vorgehen, daß man Isopren bzw. Butadien mit einem geeigneten anionischen Initiator (z.B. metallorganische Verbindung) polymerisiert und die "lebenden" anionischen Kettenenden mit z.B. Styrol umsetzt. Die so hergestellten Polymerisate werden anschließend unter Bedingungen hydriert, unter denen die vorhandenen funktionellen Gruppen nicht angegriffen werden. Bezüglich Einzelheiten der Herstellung sei auf die einschlägige Literatur verwiesen, z.B. Houben-Weyl, Methoden der Org. Chemie, 14/1, S. 110 ff.; Block Copolymers, D.C. Allport, W.H. Janes, Appl.Sci.Publishers Ltd., London, 1973; Graft Copolymers, H.A.J. Battaerd, G.W. Tregear, Polymer Reviews Vol. 16 (1967); Block and Graft Polymers, W.J. Burlant, A.S.Hoffmann, Reinhold Publishers Corp., New York, 1960.

**Trägermedium**

Als flüssiges Trägermedium wird definitionsgemäß ein solches verwendet, das die Olefincopolymerisate im Temperaturbereich von 40 - 150°C zu einem Grad von 5-300 Gew.-% anquellen läßt ("Quellungsgrad"). Der "Quellungsgrad" ist dabei wie folgt definiert:

Ein OCP-Film von 1 mm Dicke, 2 cm Länge und 0,5 cm Breite bekannten Gewichts, wird bei einer definierten Temperatur, im vorliegenden Falle meist bei 90°C (Einarbeitungstemperatur), eingetaucht und 24 Stunden lang isotherm gelagert, mit der Pinzette der Lösung entnommen, mit einem Filterpapier von anhaftendem Lösungsmittel befreit und unmittelbar anschließend ausgewogen. Als Maß der Quellung wird die Gewichtszunahme in Prozentbezogen auf das Ausgangsgewicht - definiert. Die Quellungsmessung soll bei der Temperatur, bei der die konzentrierte OCP-Emulsion hergestellt werden soll, durchgeführt werden. Erfindungsgemäß soll bei dieser Temperatur die Quellung 5 - 300 % betragen. Voraussetzung für die Anwendbarkeit des Kriteriums ist, daß unter den vorstehend angegebenen Bedingungen die maximale Quellung des OCP erreicht ist.

Die erfindungsgemäß als flüssiges Trägermedium verwendbaren Lösungsmitteln sollen inert und im ganzen unbedenklich sein. Trägermedien, die die genannten Bedingungen erfüllen, gehören z.B. zur Gruppe der Ester und/oder zur Gruppe der höheren Alkohole. In der Regel enthalten die Moleküle der als Trägermedium in Frage kommenden Verbindungstypen mehr als 8 Kohlenstoffatome pro Molekül.

Hervorzuheben sind in der Gruppe der Ester: Phosphorsäureester, Ester von Dicarbonsäuren, Ester von Monocarbonsäuren mit Diolen oder Polyalkylenglykolen, Ester von Neopentylpolyolen mit Monocarbonsäuren. (Vgl. Ullmanns Encyclopädie der Technischen Chemis, 3. Aufl., Bd. 15, S. 287-292, Urban & Schwarzenberg (1964)). Als Ester von Dicarbonsäuren kommen einmal die Ester der Phthalsäure in Frage, insbesondere die Phthalsäureester mit $C_4$ bis $C_8$-Alkoholen, wobei Dibutylphthalat und Dioctylphthalat besonders genannt seien, sodann die Ester aliphatischer Dicarbonsäuren, insbesondere die Ester geradkettiger Dicarbonsäuren mit verzweigtkettigen primären Alkoholen. Besonders hervorgehoben werden die Ester der Sebazin-, der Adipin- und der Azelainsäure, wobei insbesondere die 2-Äthylhexyl-, Isooctyl-3,5,5-Trimethylester, sowie die Ester mit den $C_8$-, $C_9$- bzw. $C_{10}$-Oxoalkoholen genannt werden sollen.

Besondere Bedeutung besitzen die Ester geradkettiger primärer Alkohole mit verzweigten Dicarbonsäuren. Als Beispiele seien die alkylsubstiutierte Adipinsäure, beispielsweise die 2,2,4-Trimethyladipinsäure genannt.

Als Alkoholkomponente kommen mit Vorteil z.B. die vorstehend genannten Oxo-Alkohole in Frage. Als Ester von Monocarbonsäuren mit Diolen oder Polyalkylenglykolen seien die Di-Ester mit Diäthylenglykol, Triäthylenglykol, Tetraäthylenglykol bis zum Dekamethylenglykol, ferner mit Dipropylenglykol als Alkoholkomponenten hervorgehoben. Als Monocarbonsäuren seien die Propionsäure, die (Iso)buttersäure sowie die Pelargonsäure spezifisch erwähnt - genannt sei beispielsweise das Dipropylenglykoldipelargonat, das Diäthylenglykoldipropionat - und Diisobutyrat sowie die entsprechenden Ester des Triäthylenglykols, sowie der Tetraäthylenglykol-di-2-äthylhexansäureester.

Es sei erwähnt, daß auch Gemische aus den vorstehend beschriebenen Lösungsmitteln für das Trägermedium in Frage kommen. Der Anteil des Trägermediums an der konzentrierten Polymerisatemulsion beträgt in der Regel 79 bis 25 Gew.-%, vorzugsweise unter 70, speziell 60 bis 40 Gew.-%.

**Gewerbliche Verwertbarkeit**

Die erfindungsgemäßen konzentrierten Emulsionen von Olefincopolymeren in einem Trägermedium können mit weiteren Monomeren, wie z.B. den bei der Herstellung der Emulgatoren unter den Formeln II, III, IV und V definierten Monomeren gepfropft werden.

Besonders genannt seien z.B. Styrol, α-Methylstyrol, Vinylester wie Vinylacetat, Ester der Acryl- und/oder Methacrylsäure mit $C_1$ - $C_{30}$-Alkolen, letztere speziell im Hinblick auf die Anwendung als VI-Verbesserer. Besonders wichtig ist in diesem Zusammenhang auch die Pfropfung mit den polaren Monomeren der Formeln IV und V, speziell mit N-Vinylpyrrolidon, N-Vinylimidazol, N-Vinylpyridin, N-Vinylcarbazol, 2-Dimethylaminoethylmethacrylat. Man erreicht dabei neben einer Verbesserung der Stabilität

noch zusätzliche erwünschte Eigenschaften, wie stockpunktverbessernde sowie Dispergier/Detergent-Wirkung. Weiterhin können die OCP-Dispersionen mit dem Polymertyp, der dem löslichen Emulgatoranteil (Y in AY) entspricht, abgemischt werden, wobei diese Polymeren dann in die kontinuierliche Phase gehen. Die bevorzugte Anwendung finden die erfindungsgemäßen konzentrierten OCP-Emulsionen auf dem Gebiet der VI-Verbesserer, jedoch bietet sich ihre Verwendung auch auf weiteren Gebieten der Technik an. Konzentrierte, dispergierwirksame OCP-Dispersionen mit Stockpunktwirkung gab es bisher auf dem Markte nicht, sondern lediglich verdünnte Lösungen (maximal 15 %ig) der Olefincopolymerisate in Mineralöl.

Die erfindungsgemäßen, konzentrierten OCP-Emulsionen sind besonders interessant, wenn sie mit den Monomeren der Formeln IV und V gepfropft worden sind. In dieser Form stellen sie dem Stand der Technik überlegene Öladditive mit Dispergier-, Detergenz- und Stockpunktwirkung dar. Verglichen mit OCP-Pfropfpolymerisaten, die in Lösung erzeugt worden sind, werden erfindungsgemäß höhere Pfropfausbeuten erzielt. Der Pfropfschritt kann z.B. ohne den bisher üblichen, sachlich bedingten Aufwand, durchgeführt werden, indem man analog der Pfropfung in Lösung arbeitet (vgl. Houben-Weyl, loc.cit).

**Beispiele**

**Beispiel 1**

Emulgator AYI = hydriertes Isopren/Styrol-Blockcopolymerisat (z.B. Handelsprodukt der Shell-Chemie Shellvis-50®)

Trägermedium: Dibutylphthalat

OCP-Quellung: 20 % bei 90°C

In einem 1l-Witt'schen Topf mit 3-stufigem Inter-Mig-Rührer (Verhältnis Rührer / Behälterdurchmesser = 0,7; 2 Strombrecher; Rührerdrehzahl ca. 450 Upm) werden 70,25 g einer 20 Gew.-%igen Lösung von Emulgator AYI in Dibutylph alat, 162,8 g Dibutylphthalat und 0,38 g Irganox 56 vorgelegt. Unter Rühren bei 110°C werden 314,45 g granuliertes OCP (Copolymerisat Äthylen/Propylen mit 30 % Propylen thermisch-oxidativ von $\bar{M}w \approx 150\,000$ auf $\bar{M}w \approx 70\,000$ abgebaut) unter Stickstoffatmosphäre portionsweise zugegeben. Dispergierzeit 4 - 5 Stunden. Dann wird mit 77,36 g Dibutylphthalat auf 52,6 Gew.-% Polymerisatgehalt verdünnt. Es wird eine milchig, trübe OCP-Emulsion erhalten:

Viskosität: 3400 mPa.s/100°C

1540 mPa.s/ 60°C

Teilchengröße: 1 - 5 µm (Phasenkontrastmikroskop)

Viskosität (2 %ige Lösung in Mineralöl mit 5,3 $mm^2/s/100°C$) 10,82/100°C 71,3/40°C

Zu 500 g dieser Emulsion werden in der gleichen Apparatur bei 100°C 13,84 g Dimethylaminoäthylmethacrylat, 12,47 g Dibutylphthalat und 0,692 g tert.-Butylperoctoat zugesetzt. Die Pfropfung erfolgt innerhalb von 4 h. Jeweils nach 1 Stunde wird 3mal mit je 0,34 g tert.-Butylperoctoat nachgefüttert. Dann gibt man ein Gemisch aus 4,94 g Methacrylsäuremethylester, 93,81 g Methacrylsäureester eines $C_{12}$-$C_{18}$-Alkoholgemisches, 125,5 g Dibutylphthalat und 2,768 g tert.-Butylperoctoat zu und polymerisiert wieder bei 100°C. Jeweils nach 1 Stunde wird 2mal mit 1,384 g tert.-Butylperoctoat nachgefüttert. Die Polymerisation ist nach 8 Stunden beendet. Man erhält eine trübe, viskose Emulsion.

Polymerisatgehalt: 50 Gew.-%

Teilchengröße: 1 - 3 µm (Phasenkontrastmikroskop)

Viskosität (5 $s^{-1}$ Schergefälle):

7700 $mm^2/s/100°C$

7580 $mm^2/s/$ 60°C

3340 $mm^2/s/$ 40°C

Daten der 2,85 %igen Lösung in Mineralöl mit 5,3 $mm^2$ /s/100°C:

Viskosität:

10,70 $mm^2/s/100°C$

69,0 $mm^2/s/$ 40°C

$VJ^B$: 144

SSI*): 20

Stockpunkt: -34°C

*) SSI = Scherstabilitätsindex; Verlust an Verdickungswirkung in % bei Scherstabilitätsprüfung nach DIN 51382

Asphaltentest bei

| 0,025 | 0,005 | 0,075 | 0,1 | 0,125 | 0,15 % Zusatz |
|---|---|---|---|---|---|
| - | - | - | + | + | + |

Diese OCP-Emulsion kann mit Viskoplex®-Typen der Röhm GmbH, Darmstadt abgemischt werden.

**Beispiel 2**

Emulgator II: Pfropfpolymerisat Polyvinyltoluol/OCP Trägermedium: Äthylglykolacetat

OCP-Quellung: 23 % bei 90°C

**Herstellung von Emulgator AY2**

In einem 1l Witt'schen Topf mit 3-stufigem Inter-Mig-Rührer werden 84 g OCP (Copolymerisat Äthylen/Propylen mit 50 % Propylen thermisch-oxidativ von $\bar{M}w = 150\,000$ auf $\bar{M}w = 70\,000$ abgebaut) in 280 g Butylacetat bei 100°C gelöst. Dieser Lösung werden 40,4 g Vinyltoluol und 1 g tert.-Butylperoctoat zugesetzt. Unter Stickstoffatmosphäre wird bei 100°C ein Gemisch aus 296,5 g Vinyltoluol und 2,956 g tert.-Butylperoctoat innerhalb von 3,5 Stunden zudosiert. 2 Stunden nach Zulaufende wird mit 0,841 g tert.-Butylperoctoat nachgefüttert. Gesamtpolymerisationszeit 8 Stunden. Man erhält eine trübe, viskose Lösung mit 60 Gew.-% Polymerisatgehalt.

**Herstellung der OCP-Emulsion**

In der Apparatur, wie in Beispiel 1, werden 70 g Emulgator AY2, 200 g Äthylglykolacetat und 100 g granuliertes OCP (Copolymerisat

Äthylen/Propylen mit 30 % Propylen thermisch-oxidativ von $\bar{M}w = 150\,000$ auf $\bar{M}w = 70\,000$ - abgebaut) vorgelegt und bei 110°C unter Stickstoffatmosphäre dispergiert. Nach 1 Stunde werden weitere 200 g OCP portionsweise zugegeben. Die Gesamtdispergierzeit beträgt 4 - 5 Stunden. Man erhält eine 60 %ige trübe Emulsion:

Teilchengröße 3 - 4 qm
Viskosität (bei $5s^{-1}$ Schergefälle):
6 250 mPa.s/80°C
3 980 mPa.s/60°C
2 140 mPa.s/40°C
1 510 mPa.s/25°C

**Beispiel 3**

Emulgator AY3: Pfropfpolymerisat Polyvinylacetat/OCP Trägermedium: Äthylglykolacetat

OCP-Quellung: 23 % bei 90°C

**Herstellung von Emulgator AY3**

Verfahrensweise und Einwaagen wie bei Emulgator AY2, aber Vinylacetat anstelle von Vinyltoluol. Man erhält eine viskose, trübe Lösung.

**Herstellung der OCP-Emulsion**

In einem 1l Witt'schen Topf mit Inter-Mig-Rührer werden 70 Emulgator AY3 und 200 g Äthylglykolacetat vorgelegt. Unter Rühren (450 Upm) werden bei 110°C und Stickstoffatmosphäre portionsweise 321 g granuliertes OCP (Copolymerisat Äthylen/Propylen mit 30 % Propylen thermisch-oxidativ von $\bar{M}w = 150\,000$ auf $\bar{M}w = 100\,000$ abgebaut) zugegeben. Dispergierzeit 4 - 5 Stunden. Man erhält eine 61,4 Gew.-%ige, trübe OCP-Emulsion.

Viakosität (bei 5 $s^{-1}$ Schergefälle):
8 570 mPa.s/60°C.
2 970 mPa.s/40°C
1 710 mPa.s/25°C

**Beispiel 4**

Emulgator AY2: Pfropfcopolymeriaat Polyvinyltoluol/OCP Trägermedium: Essigsäureäthyleater

OCP-Quellung: 32 % bei 75°C

**Herstellung der OCP-Emulsion**

In einem 1l Witt'schen Topf mit Inter-Mig-Rührer werden 100 g Emulgator AY2 und 300 g Äthylacetat bei 80°C vorgelegt. Unter Rühren (450 Upm) werden 400 g granuliertes OCP (Copolymeriaat Äthylen/Propylen mit 30 % Propylen thermisch-oxidativ von $\bar{M}w = 150\,000$ auf $\bar{M}w = 100\,000$ abgebaut) portionsweise zugegeben. Diapergierzeit 6 - 8 Stunden. Man erhält eine 57,5 Gew.-%ige, trübe Emulsion:

Teilchengröße: 3 - 5 µm
Viskosität (bei $5s^{-1}$ Schergefälle):
3 300 mPa.s/80°C
380 mPa.s/40°C
170 mPa.s/25°C

## Patentansprüche

1. Konzentrierte Emulsionen von Olefincopolymeren in einem Trägermedium, die ein flüssiges, die Olefincopolymeren nicht lösendes Trägermedium enthalten dadurch gekennzeichnet, daß als Emulgator ein Pfropf- oder Blockcopolymerisat der allgemeinen Formel I

A - Y I

worin A für ein Segment aus einem Olefincopolymerisat, hydriertem Polyisopren oder einem hydrierten Copolymeren aus Butadien/Isopren und Y für ein oder mehrere durch Polymerisation von Vinylmonomeren, die zu mindestens 70% nicht dem Acrylat- oder Methacrylattyp angehören, aufgebaute Segmente steht, wobei das Trägermedium geeignet ist, die Segmente Y zu lösen.

2. Konzentrierte Emulsionen gemäß Anspruch 1, dadurch gekennzeichnet, daß das Trägermedium die Olefincopolymerisate im Temperaturbereich zwischen 40 bis 150°C bis zu einem Grad von 5 -300 Gew.-% anquellen läßt.

3. Konzentrierte Emulsionen gemäß Anspruch 1, dadurch gekennzeichnet, daß der Anteil der Olefincopolymerisate an der Emulsion 20 bis 65 Gew.-%, vorzugsweise 30 bis 50 Gew.-%, beträgt.

4. Konzentrierte Emulsionen gemäß den Ansprüchen 1 bis 3, dadurch gekennzeichnet, daß der Anteil der Emulgatoren der allgemeinen Formel I an der Emulsion 1 bis 30 Gew.-%, vorzugsweise 5 bis 15 Gew.-%, beträgt.

5. Konzentrierte Emulsionen gemäß den Ansprüchen 1 bis 4, dadurch gekennzeichnet, daß die Segmente A und Y in dem Pfropf- oder Blockcopolymerisat der allgemeinen Formel I im Gewichtsverhältnis 1: 20 bis 20 :1 stehen.

6. Verfahren zur Herstellung von konzentrierten Emulsionen von Olefincopolymeren gemäß Anspruch 1, dadurch gekennzeichnet, daß man eine Lösung des Emulgators der allgemeinen Formel I in dem Trägermedium, welches die Olefincopolymere zu einem Grad von 5 bis 300 Gew.-% anquellen läßt, herstellt und bei Temperaturen zwischen 40 und 150°C unter Anwendung von Scherkraft das Olefincopolymerisat darin emulgiert.

7. Verfahren gemäß Anspruch 6, dadurch gekennzeichnet, daß die Segmente A und Y im Emulgator im Gewichtsverhältnis 1: 20 bis 20: 1 stehen.

8. Verfahren zur Herstellung von konzentrierten Emulsionen von Olefincopolymerisaten mit Dispergier-, Detergenz- und Stockpunktswirkung, dadurch gekennzeichnet, daß auf die in konzentrierter Emulsion befindlichen Olefincopolymeren gemäß den Ansprüchen 1 bis 7 weitere Monomere mit einem stickstoffhaltigen funktionellen Rest, vorzugsweise Monomere der Formeln IV und/oder V, pfropfend aufpolymerisiert werden.

## Claims

1. Concentrated emulsions of olefin copolymers in a carrier medium which contain a liquid carrier medium which does not dissolve the

olefin copolymers, characterised in that the emulsifier used is a graft or block copolymer of general formula

A - Y I

wherein A represents a segment of an olefin copolymer, hydrogenated polyisoprene or a hydrogenated copolymer of butadiene/isoprene and Y represents one or more segments synthesised by polymerisation of vinyl monomers at least 70% of which do not belong to the acrylate or methacrylate type, the carrier medium being capable of dissolving the segments Y.

2. Concentrated emulsions as claimed in claim I, characterised in that the carrier medium allows the olefin copolymers to swell to a degree of 5-300% by weight in a temperature range of between 40 and 150° C.

3. Concentrated emulsions as claimed in claim 1, characterised in that the proportion of olefin copolymers in the emulsion is from 20 to 65% by weight, preferably from 30 to 50% by weight.

4. Concentrated emulsions as claimed in claims 1 to 3, characterised in that the proportion of emulsifiers of general formula 1 in the emulsion is from 1 to 30% by weight, preferably from 5 to 15% by weight.

5. Concentrated emulsions as claimed in claims 1 to 4, characterized in that the segments A and Y in the graft or block copolymer of general formula I are in a weight ratio of from 1:20 to 20:1.

6. Process for preparing concentrated emulsions of olefin copolymers as claimed in claim 1, characterised in that a solution of the emulsifier of general formula I in the carrier medium which allows the olefin copolymers to swell to a degree of from 5 to 300% by weight is prepared and the olefin copolymer is emulsified therein at temperatures of between 40 and 150° C,using shearing forces.

7. Process as claimed in claim 6, characterised in that the segments A and Y in the emulsifier are in a weight ratio of from 1:20 to 20:1.

8. Process for preparing concentrated emulsions of olefin copolymers with a dispersing and detergent effect and an effect on the setting point, characterised in that other monomers having a nitrogen-containing functional group, preferably monomers of formula IV and/or V, are graft-polymerised onto the olefin copolymers as claimed in claim 1 to 7 which are in a concentrated emulsion.

**Revendications**

1. Emulsions concentrées de copolymères d'oléfines dans une substance vectrice, contenant une substance vectrice liquide qui ne dissout pas les copolymères d'oléfines, caractérisées en ce qu'elles contiennent, en tant qu'émulsionnant, un copolymère greffé ou sequencé de formule générale I

A - Y (I)

dans laquelle A est mis pour un segment d'un copolymère d'oléfine, d'un polyisoprène hydrogéné ou d'un copolymère hydrogéné de butadiène/isoprène et Y pour un ou plusieurs segments formés par polymérisation de monomères vinyliques qui, pour·70 % au moins, n'appartiennent pas au type des acrylates ou des méthacrylates, la substance vectrice étant appropriée pour dissoudre les segments Y.

2. Emulsions concentrées selon la revendication 1, caractérisées en ce que la substance vectrice fait gonfler les copolymères d'oléfines, dans la gamme de température comprise entre 40 et 150° C, jusqu'à un degré de 5 à 300 % en poids.

3. Emulsions concentrées selon la revendication 1, caractérisées en ce que la part des copolymères d'oléfines dans l'émulsion est comprise entre 20 et 65 % en poids, de préférence entre 30 et 50 % en poids.

4. Emulsions concentrées selon l'une quelconque des revendications 1 à 3, caractérisées en ce que la part des émulsionnants de formule générale I dans l'émulsion est comprise entre 1 et 30 en poids, de préférence entre 5 et 15 % en poids.

5. Emulsions concentrées selon l'une quelconque des revendications 1 à 4, caractérisées en ce que les segments A et Y sont, dans le copolymère greffé ou séquencé de formule générale I, dans un rapport de poids compris entre 1 : 20 et 20 : 1.

6. Procédé pour la préparation d'émulsions concentrées de copolymères d'olefines selon la revendication 1, caractérisé en ce qu'on prépare une solution de l'émulsionnant de formule générale I dans la substance vectrice, qui fait gonfler les copolymères d'oléfines jusqu'à un degré de 5 à 300 % en poids, et on y émulsionne le copolymère d'oléfine à une température comprise entre 40 et 150° C avec application de force de cisaillement.

7. Procédé selon la revendication 6, caractérisé en ce que les segments A et Y dans l'émulsionnant sont dans un rapport de poids compris entre 1 : 20 et 20 : 1.

8. Procédé pour la préparation d'émulsions concentrées de copolymeres d'oléfines à activité de dispersant, de détergent et à action sur le point d'écoulement, caractérisé en ce qu'on surpolymérise par greffage, sur les copolymères d'oléfines qui se trouvent en émulsion concentrée selon l'une quelconque des revendications 1 à 7, d'autres monomères comportant un radical fonctionnel azoté, de préférence des monomères des formules IV et/ou V.